(19) Europäisches Patentamt
European Patent Office
Office européen des brevets

(11) EP 1 234 856 A1

(12) EUROPEAN PATENT APPLICATION
published in accordance with Art. 158(3) EPC

(43) Date of publication:
**28.08.2002 Bulletin 2002/35**

(21) Application number: **01938581.4**

(22) Date of filing: **11.06.2001**

(51) Int Cl.7: **C08L 81/02**, C08K 7/08, C08K 3/26, C08K 5/098, C08J 7/06, G02B 5/08, F21S 8/12 // F21W101:10

(86) International application number:
**PCT/JP01/04895**

(87) International publication number:
**WO 01/096478 (20.12.2001 Gazette 2001/51)**

(84) Designated Contracting States:
**AT BE CH CY DE DK ES FI FR GB GR IE IT LI LU MC NL PT SE TR**

(30) Priority: **12.06.2000 JP 2000174935**

(71) Applicant: **IDEMITSU PETROCHEMICAL CO., LTD.**
**Tokyo 130-0015 (JP)**

(72) Inventors:
- **NAGATOSHI, Kikuo**
  **Ichihara-shi, Chiba 299-0107 (JP)**
- **IGA, Toru**
  **Ichihara-shi, Chiba 299-0107 (JP)**
- **KOJIMA, Nobuyuki**
  **Ichihara-shi, Chiba 299-0107 (JP)**

(74) Representative:
**Gille Hrabal Struck Neidlein Prop Roos**
**Patentanwälte**
**Brucknerstrasse 20**
**40593 Düsseldorf (DE)**

# (54) POLYARYLENE SULFIDE RESIN COMPOSITION AND MOLDED OBJECT THEREOF

(57) Provided are a polyarylene sulfide resin composition and its moldings of good mold releasability, good heat resistance and good surface smoothness. Coated with a metal film, the moldings may be lamp reflectors of good image reflection. The resin composition comprises (A) a polyarylene sulfide resin having a melt viscosity of from 100 to 1,500 poises at 300°C in terms of the resin temperature and at a shear rate of 200 $sec^{-1}$, (B) an inorganic granular filler having a volume-average particle size of at most 4 μm, (C) whiskers having a fiber diameter of at most 7 μm, and (D) a metal salt of a fatty acid having from 26 to 30 carbon atoms.



Printed by Jouve, 75001 PARIS (FR)

**Description**

TECHNICAL FIELD

The present invention relates to a polyarylene sulfide (PAS) resin composition and its moldings for lamp reflectors coated with a metal film.

BACKGROUND OF THE INVENTION

Thermosetting resins such as phenolic resins and unsaturated polyesters have heretofore been used for molding materials for lamp reflectors for automobile head lamps, etc. However, as requiring undercoating with resin paint for improving their surface smoothness, the moldings of such thermosetting resins are problematic in that their production process takes a lot of time and is complicated. Therefore, for simplifying the production process and for recycling the moldings to satisfy the requirement of solving the environmental problem with them, substituting thermoplastic resins for thermosetting resins is now under investigation in the art.

One is to use PAS, for which some proposals have been made. For example, proposed are PAS resin compositions containing calcium carbonate or whiskers having a specific particle size, in which the additive is for enhancing the stiffness of the resin moldings not interfering with the surface smoothness thereof (e.g., JP-A 188555/1995, 41341/1996, 251806/1997, 237302/1998).

However, when the PAS resin compositions proposed are molded in mirror-faced molds, the mold releasability of the resulting moldings is not good, and the surface of the moldings often has peel marks. In addition, since their heat resistance is not good, the surface of the moldings is often whitened and has flow marks. For these reasons, the moldings are hardly ensured of having a smooth surface, and it is often difficult to stably produce them in a continuous molding process.

The present invention is to provide a PAS resin composition of which the moldings are well releasable from molds and have good heat resistance and good surface smoothness, and to provide lamp reflectors of the moldings coated with a metal film. The advantage of the lamp reflectors is that they ensure good image reflection (that is, they reflect clear images).

DISCLOSURE OF THE INVENTION

We, the present inventors have assiduously studied to attain the object as above and have completed the present invention, which is summarized as follows:

[1] A polyarylene sulfide resin composition comprising (A) 100 parts by weight of a polyarylene sulfide resin having a melt viscosity of from 100 to 1,500 poises at 300°C in terms of the resin temperature and at a shear rate of 200 $sec^{-1}$, (B) from 20 to 250 parts by weight of an inorganic granular filler having a volume-average particle size of at most 4 μm, (C) from 0 to 50 parts by weight of whiskers having a fiber diameter of at most 7 μm, provided that the total of the components (B) and (C) is at most 250 parts by weight, and (D) from 0.1 to 5 parts by weight of a metal salt of a fatty acid having from 26 to 30 carbon atoms.

[2] The polyarylene sulfide resin composition of above [1], wherein the inorganic filler of the component (B) is calcium carbonate.

[3] The polyarylene sulfide resin composition of above [1] or [2], wherein the whiskers of the component (C) are aluminium borate whiskers.

[4] The polyarylene sulfide resin composition of any of above [1] to [3], wherein the metal salt of a fatty acid having from 26 to 30 carbon atoms of the component (D) is calcium montanate.

[5] A mirror-faced molding of the polyarylene sulfide resin composition of any of above [1] to [4], coated with a metal film.

[6] A lamp reflector of the mirror-faced molding of above [5].

BEST MODES OF CARRYING OUT THE INVENTION

Embodiments of the invention are described below.

The PAS resin composition of the invention comprises the following components (A) to (D) mixed in a specific ratio. The constituent components, the method of mixing them, and the use of the PAS resin composition are described below.

1. Component (A):

The PAS resin for the component (A) in the invention is a polymer of which the basic structural units are represented by a general formula, [-Ar-S-] wherein Ar indicates an arylene group and S indicates sulfur. Typically, it has repetitive units of the following general formula (I):

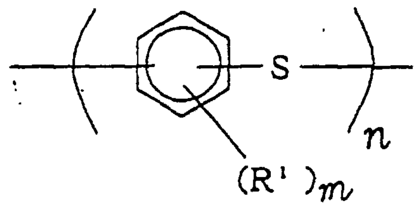

(I)

wherein $R^1$ indicates a substituent selected from an alkyl group having at most 6 carbon atoms, an alkoxy group having at most 6 carbon atoms, a phenyl group, a carboxyl group or its metal salts, a nitro group, or a halogen atom including fluorine, chlorine and bromine atoms; m indicates an integer of from 0 to 4; and n indicates a mean degree of polymerization, falling between 20 and 100.

Preferably, the PAS resin has at least 70 mol%, more preferably at least 80 mol% of p-phenylene sulfide repetitive units of those of the above-mentioned formula. If the ratio of p-phenylene sulfide repetitive units in the polymer is smaller than 70 mol%, the amount of the intrinsic crystalline component characteristic of crystalline polymers in the polymer will be small. If so, the mechanical strength of the polymer will be poor.

The molecular structure of PAS varies, depending on its production method, and includes a substantially linear structure and a branched or crosslinked structure. PAS for use in the invention may have any of such molecular structures, and may be not only a homopolymer but also a copolymer.

The comonomer units for the copolymer polyarylene sulfide include, for example, m-phenylene sulfide units, o-phenylene sulfide units, p,p'-diphenyleneketone sulfide units, p,p'-diphenylenesulfone sulfide units, p,p'-biphenylene sulfide units, p,p'-diphenylenemethylene sulfide units, p,p'-diphenylenecumenyl sulfide units, naphthyl sulfide units, etc.

The polyarylene sulfide resin for use in the invention may be produced in any known method. For example, it may be obtained by polycondensing a dihalo-aromatic compound with a sulfur source in an organic polar solvent, followed by washing and drying the resulting polycondensate.

The PAS resin for use in the invention is as in the above, and has a melt viscosity falling between 100 and 1,500 poises at 300°C in terms of the resin temperature and at a shear rate of 200 $sec^{-1}$. Preferably, its melt viscosity falls between 300 and 1,200 poises. If its melt viscosity is lower than 100 poises, the mechanical strength of the resin moldings will be low; but if higher than 1,500 poises, the flowability of the resin composition that contains the second and third components of inorganic filler and whiskers will lower to cause flow marks, and the resin composition could not form good moldings.

2. Component (B):

The component (B) for use in the invention is an inorganic granular filler having a volume-average particle size of at most 4 µm. This improves the surface smoothness of the resin moldings. However, if its volume-average particle size is larger than 4 µm, the resin moldings are hardly ensured of having a smooth surface, and, as a result, the image reflection in the mirror surface of the moldings coated with a metal film will be not good.

The volume-average particle size of the filler may be determined through laser scanning analysis. Concretely, for example, the filler particles are analyzed with a particle size distribution analyzer, Galai's CIS-1, to determine their size in terms of the volume-average particle size.

Examples of the inorganic granular filler are calcium carbonate, calcium sulfate, calcium phosphate, magnesium carbonate, magnesium oxide, magnesium phosphate, talc, mica, silica, alumina, silica-alumina, kaolin, bentonite, montmorillonite, clay, graphite, carbon black, glass beads, titanium oxide, zirconium oxide, silicon nitride, hydrotalcite, and aluminium hydroxide. Of those, especially preferred is calcium carbonate, as stable and easily available.

3. Component (C):

Though not specifically defined in point of the material for them, the whiskers for the component (C) in the invention have a fiber diameter of at most 7 µm. If the fiber diameter of the whiskers is larger than 7 µm, the resin moldings are hardly ensured of having a smooth surface, and, as a result, the image reflection in the mirror surface of

the moldings coated with a metal film will be not good.

Examples of the whiskers for use in the invention are potassium titanate whiskers, aluminium borate whiskers, calcium carbonate whiskers, calcium silicate whiskers (wollastonite), calcium silicate whiskers (xonotlite), silicon carbide whiskers, silicon nitride whiskers, zinc oxide whiskers, alumina whiskers, and graphite whiskers. Of those, especially preferred are aluminium borate whiskers, as more effectively improving the flexural modulus of the resin moldings and ensuring the mirror surface thereof coated with a metal film.

The fiber diameter of the whiskers for use herein is measured through microscopy.

4. Component (D):

The component (D) for use in the invention is a metal salt of a fatty acid having from 26 to 30 carbon atoms. Adding a metal salt of a fatty acid having from 26 to 30 carbon atoms to the resin composition comprising the components (A) to (C) improves the heat resistance of the resin moldings, and prevents the resin moldings from being whitened through phase separation, and, in addition, it significantly improves the releasability of the resin moldings from molds. Accordingly, peel marks do not appear in the surface of the resin moldings and white deposits do not adhere to the surface thereof. Stably producing the resin moldings in a continuous molding process is therefore possible. The fatty acid having from 26 to 30 carbon atoms that forms the metal salt is preferably a monobasic fatty acid, more preferably a linear saturated fatty acid. For example, it includes cerotic acid (heptacosanoic acid), montanic acid (octacosanoic acid) and melissic acid (triacontanoic acid). Especially preferred is montanic acid as easily available. The metal to form the salt of the fatty acid having from 26 to 30 carbon atoms is preferably an alkali metal or an alkaline earth metal, including, for example, lithium, sodium, potassium, calcium, magnesium and barium. Of those, especially preferred are sodium and calcium as their metal salts are highly effective. Preferred examples of the metal salt of the fatty acid having from 26 to 30 carbon atoms for use in the invention are sodium montanate and calcium montanate. Especially preferred is sodium montanate.

5. Formulation Method:

The PAS resin composition of the invention comprises (A) 100 parts by weight of a PAS resin having a specific melt viscosity as above, (B) from 20 to 250 parts by weight, preferably from 40 to 200 parts by weight of an inorganic granular filler having a volume-average particle size of at most 4 μm, (C) from 0 to 50 parts by weight, preferably from 0 to 40 parts by weight of whiskers having a fiber diameter of at most 7 μm, and (D) from 0.1 to 5 parts by weight, preferably from 0.2 to 3 parts by weight of a metal salt of a fatty acid having from 26 to 30 carbon atoms. In this, however, the total of the components (B) and (C) must be at most 250 parts by weight, preferably falling between 40 and 200 parts by weight.

If the amount of the inorganic filler for the component (B) to be in the resin composition is smaller than 20 parts by weight, the mechanical strength, especially the stiffness of the resin moldings will be low; but if larger than 250 parts by weight, the resin moldings are hardly ensured of having a smooth surface, and, as a result, the image reflection in the mirror surface of the moldings coated with a metal film will be not good. The whiskers for the component (C) have the function of improving the stiffness of the resin moldings, and are optionally in the resin composition. However, if the amount of the whiskers therein is larger than 50 parts by weight, the resin moldings are hardly ensured of having a smooth surface, and, as a result, the image reflection in the mirror surface of the moldings coated with a metal film will be not good. If the total of the components (B) and (C) in the resin composition is larger than 250 parts by weight, the image reflection in the mirror surface of the metal film-coated moldings will be not good for the same reason as above.

If the amount of the metal salt of a fatty acid having from 26 to 30 carbon atoms for the component (D) in the resin composition is smaller than 0.1 parts by weight, the mold releasability of the resin moldings will be poor; but if larger than 5 parts by weight, the metal salt will bleed out to worsen the mirror surface of the metal film-coated moldings.

If desired, the PAS resin composition of the invention may optionally contain other various additives such as silane coupling agent, antioxidant, thermal stabilizer, lubricant, plasticizer, electroconductive agent, colorant, pigment, etc. To prepare the resin composition, the constituent components are kneaded in, for example, a ribbon tumbler, a Henschel mixer, a Banbury mixer, a drum tumbler, a single-screw extruder, etc. The kneading temperature generally falls between 280 and 320°C.

6. Use:

When injection-molded, the PAS resin composition of the invention forms good moldings having a smooth surface. Coated with a metal film of aluminium, silver or the like, the resin moldings may be mirror-faced articles.

Specifically, the moldings of the PAS resin composition of the invention have a flexural modulus of at least 4

GPa, and are well releasable from molds. Coated with a metal film as above, the mirror-faced articles of the moldings may have an image reflection of at least 90 %. In addition, another advantage of the resin moldings is that their heat resistance is good. Therefore, the PAS resin composition of the invention is especially favorable for the following applications.

Mirrors that are used in thermally and environmentally severe conditions (for example, under the condition requiring chemical resistance or steam resistance), automobile lamp reflectors for fog lamps and head lamps, and lighting reflectors (e.g., down-light cover).

The invention is described in more detail with reference to the following Examples, which, however, are not intended to restrict the scope of the invention.

[Examples 1 to 13, Comparative Examples 1 to 5]

In a superfloater (shaking mixer), the components mentioned below were uniformly mixed in the blend ratio (parts by weight) indicated in Tables 1 to 5, then kneaded in melt in a double-screw extruder (Toshiba Kikai's TEM35B) at 300 to 350°C, and pelletized.

The resulting pellets were molded into tabular test pieces, for which was used a 50-ton injection-molding machine (Nippon Seikosho's J50E-P) equipped with a mirror-faced mold for plates (plate size: 80 × 80 × 2 mm thick). The cylinder temperature was 280 to 330°C, the nozzle temperature was 310 to 330°C, and the mold temperature was 130 to 135°C.

The test pieces were tested and checked for the flexural modulus, the mold releasability, the image reflection and the surface appearance. The results are given in Tables 1 to 5.

[Test Methods]

The test pieces of Examples and Comparative Examples were tested and checked for the flexural modulus, the mold releasability, the image reflection and the surface appearance according to the test methods mentioned below.

<1> Flexural Modulus:

Measured according to ASTM D790.

<2> Mold Releasability:

When the test pieces are released from the mold, they are visually checked for its condition and surface appearance.

○: Smoothly released from the mold with no problem of surface defects.
×: Not smoothly released from the mold, and some defects are seen on their surface.

<3> Image Reflection:

Aluminium is deposited on the test pieces through vacuum evaporation (thickness of aluminium film deposited, about 100 nm). These are tested with a Suga Test Instruments' image reflection tester (Model ICM-1). The principle of the measurement is as follows: Depending on its reflectivity, the test piece reflects the image of a light source, and the reflected image is diffused (that is, the reflected image seen in the test piece is larger and vaguer than that in a mirror). Through an optical slit (having a predetermined check pattern), a light receiver is set to receive the light reflected by the test piece, and the image reflection (relative value C) of the test piece is evaluated in terms of the quantity of light which the light receiver has received, relative to the quantity of light which the light receiver has received from a mirror in the same condition. In case where the reflected image in the test piece is diffused, the quantity of light to be shielded by the slit is large and the quantity of light that the light receiver receives is small. Concretely, the test piece and the light source are so set that the test piece receives the light from the light source at an incident angle of 45 degrees. The optical slit (having an optical comb width of 1.0 mm) is set to be perpendicular to the reflection angle of 45 degrees. The light receiver is set after the slit. In this condition, the slit receives the light source image having reflected in the test piece. The slit is moved in the direction perpendicular to the reflection angle, and the quantity of light which the light receiver after the slit receives is measured. The minimum quantity of light which the light receiver has received via the slit is the maximum reflectivity, M; and the maximum quantity of light which the light receiver has received via the slit is the minimum reflectivity, m. The image reflection of the test piece is indicated by the following equation:

$$\text{Image Reflection (value C)} = [(M - m)/(M + m)] \times 100\ \%.$$

<4> Surface Appearance:

Good: The moldings are not whitened, and do not have flow marks.
Not good: The moldings are whitened, and have flow marks

[Components of resin composition used in Examples]

(PAS resin)

PPS-1: Polyphenylene sulfide (Topren's K-1) having a melt viscosity of 390 poises (300°C).
PPS-2: Polyphenylene sulfide (Topren's T-2) having a melt viscosity of 640 poises (300°C).
PPS-3: Polyphenylene sulfide (Topren's LN-2G) having a melt viscosity of 1050 poises (300°C).
PPS-4: Polyphenylene sulfide (Topren's #160) having a melt viscosity of 1800 poises (300°C).

To measure their melt viscosity (poises), the PAS resins were tested in a capillograph (by Toyo Seiki) at a resin temperature of 300°C and at a shear rate of 200 $sec^{-1}$.

(Inorganic Granular Filler)

Calcium carbonate 1: Caltex 5 (by Maruo Calcium), having a volume-average particle size of 1.2 µm.
Calcium carbonate 2: SL2200 (by Takehara Chemical Industry), having a volume-average particle size of 3.5 µm.
Kaolin clay: Icecap K (calcined) (by Shiraishi Industry), having a volume-average particle size of 1.0 µm.
Silica: Admafine SO-C5 (by Admatex), having a volume-average particle size of 1.6 µm.

(Whiskers)

Whiskers 1: Calcium silicate whiskers (NYCO's NYGLOS), having a fiber diameter of from 1 to 7 µm and a ratio L/D of from 5 to 20.
Whiskers 2: Aluminium borate whiskers (Shikoku Kasei's Alborex YS2A), having a fiber diameter of from 0.5 to 1 µm and a ratio L/D of from 10 to 60.

(Metal Salt of Fatty Acid)

Sodium montanate: Clariant Japan's Hostamont CaV101.
Calcium montanate: Clariant Japan's Hostamont CaV102.
Calcium stearate: by Nippon Yushi.

Table 1

| | | | | | (blend ratio: parts by weight) |
|---|---|---|---|---|---|
| | Example 1 | Example 2 | Example 3 | Example 4 | Comparative Example 1 |
| PAS-1 | 100 | 100 | 100 | 100 | 100 |
| Calcium Carbonate 1 | 67 | | | | |

Table 1 (continued)

| (blend ratio: parts by weight) | | | | | |
|---|---|---|---|---|---|
| | Example 1 | Example 2 | Example 3 | Example 4 | Comparative Example 1 |
| Calcium Carbonate 2 | | 67 | 35 | 200 | 67 |
| Calcium Montanate | 0.5 | 0.5 | 0.5 | 0.5 | - |
| Flexural Modulus (GPa) | 6.6 | 6.7 | 5.6 | 12.5 | 6.9 |
| Mold Releasability | ○ | ○ | ○ | ○ | × |
| Image Reflection (%) | 98 | 97 | 98 | 96 | 96 |
| Surface Appearance | good | good | good | good | not good |

Table 2

| (blend ratio: parts by weight) | | | | | |
|---|---|---|---|---|---|
| | Example 5 | Example 6 | Example 7 | Comparative Example 2 | Comparative Example 3 |
| PAS-1 | 100 | 100 | 100 | 100 | 100 |
| Calcium Carbonate 2 | 67 | 57 | 67 | 67 | 57 |
| Sodium Montanate | 0.5 | | | | |
| Calcium Montanate | | 1.0 | 0.3 | 0.05 | - |
| Calcium Stearate | | | | | 1.0 |
| Flexural Modulus (GPa) | 6.6 | 6.4 | 6.7 | 6.7 | 6.2 |
| Mold Releasability | ○ | ○ | ○ | × | ○ |
| Image Reflection (%) | 97 | 97 | 97 | 97 | 96 |
| Surface Appearance | good | good | good | good | not good |

Table 3

| (blend ratio: parts by weight) | | |
|---|---|---|
| | Example 8 | Example 9 |
| PAS-1 | 100 | 100 |
| Kaolin Clay | 100 | |
| Silica | | 100 |
| Calcium Montanate | 0.5 | 0.5 |
| Flexural Modulus (GPa) | 8.7 | 8.4 |
| Mold Releasability | ○ | ○ |
| Image Reflection (%) | 97 | 98 |
| Surface Appearance | good | good |

Table 4

| (blend ratio: parts by weight) | | | |
|---|---|---|---|
| | Example 10 | Example 11 | Comparative Example 4 |
| PAS-1 | 100 | 100 | 100 |
| Calcium Carbonate 2 | 100 | 130 | 100 |
| Whiskers 1 | 40 | | 40 |
| Whiskers 2 | | 10 | |
| Calcium Montanate | 0.5 | 0.5 | - |
| Flexural Modulus (GPa) | 12.5 | 11.5 | 13.5 |
| Mold Releasability | ○ | ○ | x |
| Image Reflection (%) | 93 | 95 | 93 |
| Surface Appearance | good | good | not good |

Table 5

| (blend ratio: parts by weight) | | | |
|---|---|---|---|
| | Example 12 | Example 13 | Comparative Example 5 |
| PAS-2 | 100 | | |
| PAS-3 | | 100 | |
| PAS-4 | | | 100 |
| Calcium Carbonate 2 | 67 | 67 | 67 |
| Calcium Montanate | 0.3 | 0.3 | 0.3 |
| Flexural Modulus (GPa) | 6.4 | 6.8 | 6.6 |
| Mold Releasability | ○ | ○ | ○ |
| Image Reflection (%) | 98 | 97 | 85 |
| Surface Appearance | good | good | not good |

INDUSTRTAL APPLICABILITY

The polyarylene sulfide resin composition of the invention is, when molded, well releasable from molds and has high heat resistance, and its moldings have a smooth surface. When coated with a metal film, the moldings ensure good image reflection, and they are especially favorable for lamp reflectors.

## Claims

1. A polyarylene sulfide resin composition comprising (A) 100 parts by weight of a polyarylene sulfide resin having a melt viscosity of from 100 to 1,500 poises at 300°C in terms of the resin temperature and at a shear rate of 200 $sec^{-1}$, (B) from 20 to 250 parts by weight of an inorganic granular filler having a volume-average particle size of at most 4 µm, (C) from 0 to 50 parts by weight of whiskers having a fiber diameter of at most 7 µm, provided that the total of the components (B) and (C) is at most 250 parts by weight, and (D) from 0.1 to 5 parts by weight of a metal salt of a fatty acid having from 26 to 30 carbon atoms.

2. The polyarylene sulfide resin composition as claimed in claim 1, wherein the inorganic filler of the component (B) is calcium carbonate.

3. The polyarylene sulfide resin composition as claimed in claim 1 or 2, wherein the whiskers of the component (C)

are aluminium borate whiskers.

**4.** The polyarylene sulfide resin composition as claimed in any of claims 1 to 3, wherein the metal salt of a fatty acid having from 26 to 30 carbon atoms of the component (D) is calcium montanate.

**5.** A mirror-faced molding of the polyarylene sulfide resin composition of any of claims 1 to 4, coated with a metal film.

**6.** A lamp reflector of the mirror-faced molding of claim 5.

## INTERNATIONAL SEARCH REPORT

International application No.
PCT/JP01/04895

A. CLASSIFICATION OF SUBJECT MATTER
Int.Cl$^7$ C08L81/02, C08K7/08, C08K3/26, C08K5/098, C08J7/06, G02B5/08, F21S8/12 // F21W101:10

According to International Patent Classification (IPC) or to both national classification and IPC

B. FIELDS SEARCHED

Minimum documentation searched (classification system followed by classification symbols)
Int.Cl$^7$ C08L81/00-81/02, C08K7/08, C08K3/24-3/26, C08K5/098, C08J7/04-7/06, G02B5/08, F21S8/10-8/12

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 7-188555 A (Toray Industries, Inc.), 25 July, 1995 (25.07.95), Claims; Par. Nos. [0011], [0013], [0015]; working example (Family: none) | 1-3,5,6<br><br>4 |
| Y<br><br>A | JP 10-212408 A (Tosoh Corporation), 11 August, 1998 (11.08.98), Claims; Par. Nos. [0036] to [0038], [0043]; working example (Family: none) | 4<br><br>1-3,5,6 |
| X<br><br>Y | JP 5-320506 A (Dainippon Ink and Chemicals, Inc.), 03 December, 1993 (03.12.93), Claims; Par. Nos. [0055], [0057] to [0059]; working example (Family: none) | 1,2,5,6<br><br>4 |
| Y | US 5945775 A (Koito Manufacturing Co., Ltd.), 31 August, 1999 (31.08.99), Claims; column 3, lines 9 to 16; column 3, lines 33 to 48; working example & JP 9-251806 A Claims; Par. Nos. [0011], [0013]; working example | 1,2,4-6 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 August, 2001 (13.08.01) | 04 September, 2001 (04.09.01) |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP01/04895

C (Continuation). DOCUMENTS CONSIDERED TO BE RELEVANT

| Category* | Citation of document, with indication, where appropriate, of the relevant passages | Relevant to claim No. |
|---|---|---|
| Y | EP 502676 A1 (Polyplastics Co., Ltd.), 09 September, 1992 (09.09.92), Claims; page 2, lines 1 to 6; page 3, lines 25 to 31; page 4, lines 25 to 29; page 4, lines 38 to 44; working example & JP 5-70688 A Claims; Par. Nos. [0001], [0005] to [0007]; working example & US 5223564 A | 1,2,4-6 |
| Y | JP 10-237302 A (Toray Industries, Inc.), 08 September, 1998 (08.09.98), Claims; Par. Nos. [0009], [0013], [0020]; working example (Family: none) | 1,2,4-6 |
| A | JP 7-97508 A (Toray Industries, Inc.), 11 April, 1995 (11.04.95), Claims; Par. Nos. [0019], [0023], [0032] (Family: none) | 1-6 |

Form PCT/ISA/210 (continuation of second sheet) (July 1992)